# EUROPEAN PATENT APPLICATION

(11) **EP 4 704 370 A1**
(43) Date of publication of application: **04.03.2026**
(21) Application number: 24796484.4
(22) Date of filing: 26.01.2024
(51) Int. Cl.: H04L 9/10, G06F 21/60, G09C 1/00

(54) **DATA MANAGEMENT SYSTEM AND INFORMATION PROCESSING METHOD USING CONCEALED DATA**

(30) Priority: 25.04.2023 JP 2023071758
(71) Applicant: Hitachi, Ltd., Tokyo 100-8280 (JP)
(72) Inventor: SATO, Keiichi, Tokyo 100-8280 (JP); KAWAMOTO, Narumi, Tokyo 100-8280 (JP)
(74) Representative: MERH-IP Matias Erny Reichl Hoffmann Patentanwälte PartG mbB
(86) International application number: PCT/JP2024/002450
(87) International publication number: WO 2024/224725

(57) **Abstract**

A data management system has functions for managing a database that stores concealed data having been encrypted based on a probabilistic encryption scheme using a user secret key, for connecting to a client terminal and to a service providing system, and for generating a trusted area on a storage device. Upon receiving a request indicating use of a service that uses the concealed data from the client terminal, the data management system acquires concealed data from the database, stores the concealed data in the trusted area; decrypts the concealed data thus acquired, in the trusted area; generates transmission data to be transmitted to the service providing system, in the trusted area, by using the concealed data thus decrypted, for the use of the service; encrypts the transmission data in a format that is decryptable by the service providing system, in the trusted area; and transmits the transmission data thus encrypted to the service providing system.

## Description

This application claims priority to Japanese Patent Application No. 2023-71758 filed on April 25, 2023, the contents of which are incorporated herein by reference.

### Technical Field

The present invention relates to a system and an information processing method for processing confidential information, such as personal information, that is in a concealed state.

### Background Art

In December 2016, the Basic Act on the Advancement of Public and Private Sector Data Utilization was promulgated and enforced to promote proper use of public and private sector data related to individuals, by various entities. In May 2017, the Amended Act on the Protection of Personal Information was put into effect. With provisions for anonymized information and sensitive personal information in place, infrastructures for protecting and utilizing personal data have developed, and utilization of personal data has become widespread. At the same time, security incidents such as information leakage of personal data are increasing every year, and consumers' concerns about the use of data are growing.

Under such circumstances, technologies focusing on the prevention of leakage of personal data have been developed. For example, PTL 1 describes a data management technique using a searchable encryption technology. The technique described in PTL 1 prevents information leakage to a server administrator, permits a DB server to search data without decrypting data, while enabling search results to be decrypted on user terminals. At this time, only a user terminal with a key (hereinafter, a user secret key) is permitted to search/decrypt such data.

From the viewpoint of protecting personal information, such a technology is very effective, because the user secret key for searching/decryption can be managed in a manner isolated from the information concealed therewith. For example, if the key and the concealed information are on the same server, a malicious third party may steal both of the key and the concealed information by making unauthorized access or the like, and decrypt the encrypted data.

By isolating the user secret key from the concealed information, a server administrator and a business operator (hereinafter, a service provider) providing systems using PTL 1 can provide various systems without being exposed to concealed information that is managed by users who use such systems using PTL 1.

### Citation List

### Patent Literatures

PTL 1: JP 2012-123614 A
PTL 2: JP 2018-097034 A

### Summary of Invention

### Technical Problem

Systems using PTL 1 have a challenge in making it difficult to establish a linkage with an external service. It is because, in order to establish a linkage with external services, concealed information needs to be decrypted.

As an enabling approach, the user secret keys for decrypting the concealed information may be retained on the external service. However, if user secret keys are to be passed to all of the external services that are used by users, burdens on service providers and external servicing operators increase, and security declines. Therefore, this approach is not suitable for practical use.

As another enabling method, it is also possible to store the user secret keys in a server where concealed information is managed, and to permit the server to decrypt the concealed information and to transmit the decrypted information to the external service. However, with this method, because the keys are not stored in isolation from the concealed information, there is an extremely high security risk, and the effect of the technology according to PTL 1 is impeded significantly.

An object of the present invention is to provide a system enabling linkage with an external service securely and easily with lower security risks.

### Solution to Problem

A representative example of the invention disclosed in the present application is as follows. That is, a data management system includes: at least one computer including a processing device and a storage device, and is configured:
to manage a first database that stores concealed data having been encrypted based on a probabilistic encryption scheme using a user secret key; and to connect to a client terminal that registers the concealed data in a data management system, and to a service providing system that provides a service, in which the processing device has a function for generating a trusted area in which security is ensured and that is logically isolated, in the storage device; the data management system is configured: to acquire at least one piece of the concealed data from the first database, and to store the at least one piece of the concealed data in the trusted area, upon receiving a request indicating use of the service that uses the concealed data from the client terminal;
to decrypt the concealed data thus acquired, in the trusted area; to generate first transmission data to be transmitted to the service providing system, in the trusted area, by using the decrypted secret data, for the use of the service;
and to encrypt the first transmission data in a format that is decryptable by the service providing system, in the trusted area, and to transmit the first transmission data thus encrypted, to the service providing system.

### Advantageous Effects of Invention

According to an embodiment of the present invention, linkage with an external service can be established securely and easily, with lower security risks. Problems, configurations, and advantageous effects other than those explained above will become clear in the following description of the embodiments.

### Brief Description of Drawings

[FIG. 1] FIG. 1 is a diagram illustrating an exemplary configuration of a computer system according to a first embodiment.
[FIG. 2] FIG. 2 is a diagram illustrating one example of a hardware configuration of a client terminal according to the first embodiment.
[FIG. 3] FIG. 3 is a diagram illustrating one example of a hardware configuration of a data management server according to the first embodiment.
[FIG. 4] FIG. 4 is a diagram illustrating one example of a functional configuration of a client terminal according to the first embodiment.
[FIG. 5] FIG. 5 is a diagram illustrating one example of a functional configuration of the data management server according to the first embodiment.
[FIG. 6A] FIG. 6A is a sequence chart illustrating one example of the sequence of processing performed by the computer system according to the first embodiment.
[FIG. 6B] FIG. 6B is a sequence chart illustrating one example of the sequence of processing performed by the computer system according to the first embodiment.
[FIG. 7] FIG. 7 is a diagram illustrating one example of registration information according to the first embodiment.
[FIG. 8] FIG. 8 is a diagram illustrating one example of searchable encrypted registration information according to the first embodiment.
[FIG. 9] FIG. 9 is a diagram illustrating one example of searchable encrypted registration information (TEE) according to the first embodiment.
[FIG. 10] FIG. 10 is a diagram illustrating one example of decrypted searchable encrypted registration information (TEE) according to the first embodiment.
[FIG. 11] FIG. 11 is a diagram illustrating an exemplary configuration of a computer system according to a second embodiment.
[FIG. 12] FIG. 12 is a diagram illustrating one example of a functional configuration of a data management server according to the second embodiment.
[FIG. 13] FIG. 13 is a diagram illustrating one example of a functional configuration of a client terminal according to the second embodiment.
[FIG. 14] FIG. 14 is a diagram illustrating one example of a functional configuration of a client terminal according to the second embodiment.
[FIG. 15] FIG. 15 is a diagram illustrating one example of a functional configuration of a temporary data management server according to the second embodiment.
[FIG. 16A] FIG. 16A is a sequence chart illustrating one example of the sequence of processing performed by the computer system according to the second embodiment.
[FIG. 16B] FIG. 16B is a sequence chart illustrating one example of the sequence of processing performed by the computer system according to the second embodiment.
[FIG. 17] FIG. 17 is a diagram illustrating one example of registration data according to the second embodiment.
[FIG. 18] FIG. 18 is a sequence chart illustrating one example of the sequence of processing performed by the computer system according to a third embodiment.

### Description of Embodiments

Some embodiments of the present invention will now be explained with reference to drawings. However, the present invention is not to be construed as being limited to the description of the following embodiment. Those skilled in the art can easily understand that specific configurations may be modified within the scope not departing from the spirit or gist of the present invention.

In the configurations according to the invention described below, the same or similar configurations or functions are denoted by the same reference numerals, and redundant descriptions thereof will be omitted.

Notations such as "first", "second", and "third" in the description herein and the like are given for the purpose of identifying the components, and are not necessarily limiting of the number or order.

### [First Embodiment]

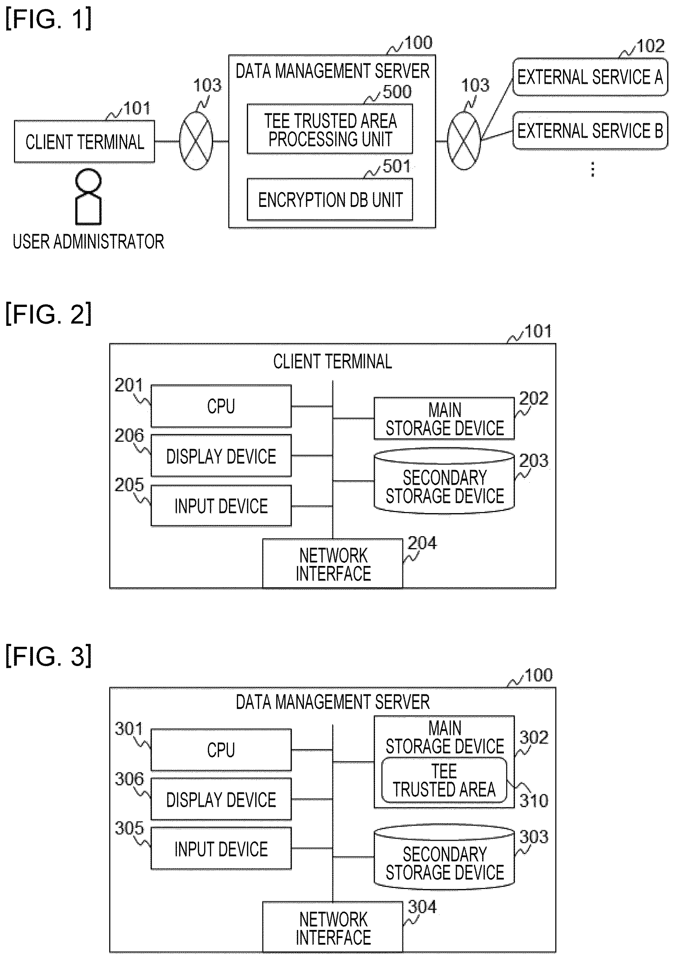

A configuration of a computer system according to a first embodiment will now be explained with reference to FIGS. 1 to 5.

FIG. 1 is a diagram illustrating an exemplary configuration of the computer system according to the first embodiment.

The computer system according to the first embodiment includes a data management server 100, a client terminal 101, and external services 102. Note that the computer system may include two or more client terminals 101 and external services 102.

The data management server 100 is communicably connected to the client terminal 101 and the external services 102 over a network 103. Examples of the network 103 include a wide area network (WAN) and a local area network (LAN). The network connection may be either wired or wireless connection.

The external services 102 are external systems that provide various services such as an electronic signature verification service, a face matching service, an email transmission service, and a file server service. The present invention is not limited to any type of service provided by the external services 102.

The client terminal 101 is a terminal on which a user administrator makes operations. On the client terminal 101, tasks such as browsing and searching registration information, checking on the results of processing of the external services 102, and managing the overall status are carried out.

The data management server 100 manages registration information, and generates and shares information to be transmitted to the external services 102. Note that the data management server 100 executes encryption (searchable encryption) generating data that is searchable without being decrypted.

FIG. 2 is a diagram illustrating one example of a hardware configuration of the client terminal 101 according to the first embodiment.

The client terminal 101 is an information processing device such as a personal computer, a smartphone, or a server device, and includes a CPU 201, a main storage device 202, a secondary storage device 203, a network interface 204, an input device 205, and a display device 206. One example of the main storage device 202 is a dynamic random access memory (DRAM), and examples of the secondary storage device 203 include a hard disk drive (HDD) and a solid-state drive (SSD). Examples of the input device 205 include a keyboard, a mouse, and a touch panel.

Note that the client terminal 101 may also be implemented as a virtual computer.

FIG. 3 is a diagram illustrating one example of a hardware configuration of the data management server 100 according to the first embodiment.

The data management server 100 is an information processing device such as a personal computer, a smartphone, or a server device, and includes a CPU 301, a main storage device 302, a secondary storage device 303, a network interface 304, an input device 305, and a display device 306. One example of the main storage device 302 is a DRAM, and examples of the secondary storage device 303 include an HDD and an SSD. Examples of the input device 305 include a keyboard, a mouse, and a touch panel.

The CPU 301 included in the data management server is a CPU having a TEE function, and is capable of generating a TEE trusted area 310 in a storage area of the main storage device 302. A possible example is a CPU equipped with Intel Software Guard Extensions (SGX) (Intel is a registered trademark; the same applies hereunder).

The TEE trusted area 310 is a hardware-like area not permitting reading of any information even if the administrator privilege of the computer gets stolen.

Note that the data management server 100 may also be implemented as a virtual computer. The data management server 100 may also be implemented as a data management system including a plurality of computers.

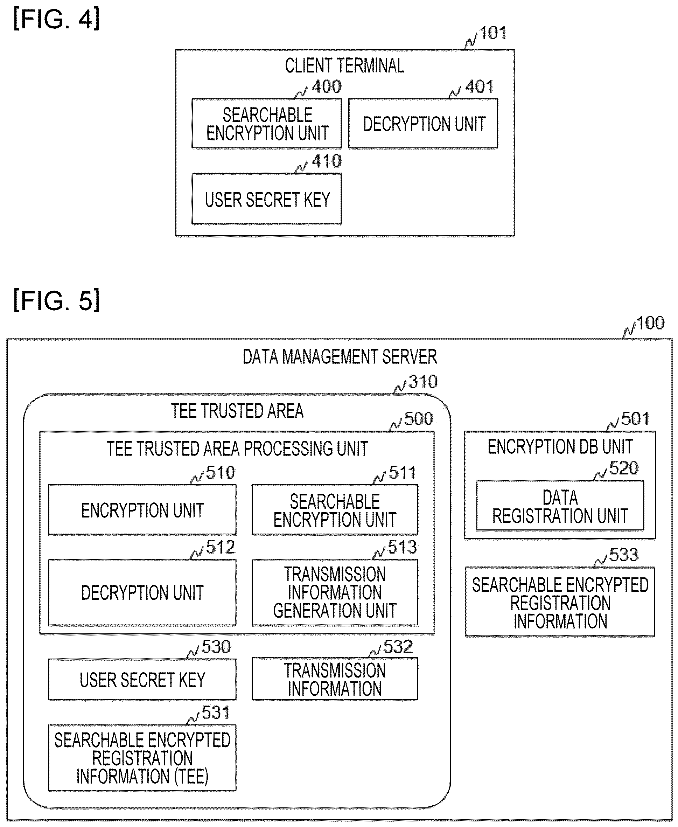

FIG. 4 is a diagram illustrating one example of a functional configuration of the client terminal 101 according to the first embodiment.

The client terminal 101 includes a searchable encryption unit 400 and a decryption unit 401, as functional configurations. Each of these functional units is implemented by causing the CPU 201 to execute a program stored in the main storage device 202. The client terminal 101 also retains a user secret key 410.

Note that the client terminal 101 also has functions and information not illustrated, but functions and information not directly related to the present invention are omitted.

The user secret key 410 is a secret key defined for a user administrator who uses the client terminal 101. The user secret key 410 is used in searchable encryption and decryption. The user secret key 410 is a secret key that can be added, deleted, and updated. Because the user secret key 410 is a secret key assigned to the user administrator, the client terminal 101 retains the number of user secret keys 410 equal to the number of user administrators who are to use the client terminal 101. Each of the user secret keys 410 has a value different from the other user secret keys 410. Because the user secret key 410 is described in PTL 2, detailed description thereof will be omitted.

The searchable encryption unit 400 performs "searchable encryption" of data, the data resultant of which can be searched in the encrypted state. Specifically, the searchable encryption unit 400 generates searchable encrypted data (concealed data) by encrypting data with a probabilistic encryption scheme using a mask based on a hash value and an output value from a homomorphic function. Such a method for generating searchable encrypted data is disclosed in PTL 1, for example.

The decryption unit 401 decrypts encrypted results of processing or the like, received from the data management server 100.

FIG. 5 is a diagram illustrating one example of a functional configuration of the data management server 100 according to the first embodiment.

The data management server 100 includes a TEE trusted area processing unit 500 and an encryption DB unit 501 as a functional configuration. Each of these functional units is implemented by causing the CPU 301 to execute a program stored in the main storage device 302.

The data management server 100 also has functions and information not illustrated, but functions and information not directly related to the present invention are omitted.

The TEE trusted area 310 stores therein a user secret key 530, searchable encrypted registration information (TEE) 531, and transmission information 532. In an area other than the TEE trusted area 310, searchable encrypted registration information 533 is stored.

The TEE trusted area processing unit 500 operates in the TEE trusted area 310 from which even a server administrator having administrator privilege of the server OS or a cyberattacker who has acquired the administrator privilege by a cyberattack is prohibited from reading information. That is, the TEE trusted area processing unit 500 can process confidential information and various types of key information as plaintexts while maintaining the concealment of the data against the server administrator and the cyberattacker.

The TEE trusted area processing unit 500 includes an encryption unit 510, a searchable encryption unit 511, a decryption unit 512, and a transmission information generation unit 513. The TEE trusted area processing unit 500 also serves to manage the user secret key 530, the searchable encrypted registration information (TEE) 531, and the transmission information 532.

The user secret key 530 is a secret key that can be used only in the TEE trusted area 310. The user secret key 530 is a secret key with a nature similar to that of the user secret key 410 possessed by the client terminal 101.

The searchable encrypted registration information (TEE) 531 stores therein searchable encrypted registration data extracted from the searchable encrypted registration information 533 owned by the encryption DB unit 501.

The transmission information 532 stores, for each of the external services 102, data having a predetermined data format to be used in the service. For example, this data contains a sender address, a receiver address, a subject, and a message body used in an email.

The encryption unit 510 encrypts data using a basic encryption technology such as AES. The searchable encryption unit 511 performs searchable encryption of data. The decryption unit 512 decrypts encrypted data, such as encrypted processing results. The transmission information generation unit 513 generates data in a data format that can be used by each of the external services 102.

The encryption DB unit 501 includes a data registration unit 520. The encryption DB unit 501 also serves to manage the searchable encrypted registration information 533.

The searchable encrypted registration information 533 stores registration data including searchable encrypted data values.

The data registration unit 520 registers data in the searchable encrypted registration information 533.

Processing performed by the computer system according to the first embodiment will now be explained. In the following description of the processing according to the first embodiment, a use case in which an email transmission service is used as the external service 102 will be used as an example.

It is assumed herein that the user administrator is providing some kind of service, and keeps the registered information related to users who use the service (registration data), in the data management server 100. In other words, in the searchable encrypted registration information 533, one piece of registration data (record) is registered for one user. Also assumed herein is a case in which the user administrator performs an operation for transmitting emails to users. When emails are to be transmitted to several persons, the user administrator can use an SMTP server managed by the user administrator. However, when a batch of mass emails are to be transmitted at once, the load to be imposed on the SMTP server may be too heavy to handle, and the SMTP server may experience a failure. For this reason, there is a case where the user administrator uses an external service 102 for transmitting a batch of emails. In such a case, it is necessary to establish a secure linkage of information in the data management server 100, where the registration data including email addresses and the like are managed, with the external service 102.

The data management server 100 according to the first embodiment generates data in a data format that is required in a batch email transmission, and that is usable by the external service 102, and transmits the data to the external service 102, while keeping the registration data in concealment. Specific processing will now be explained.

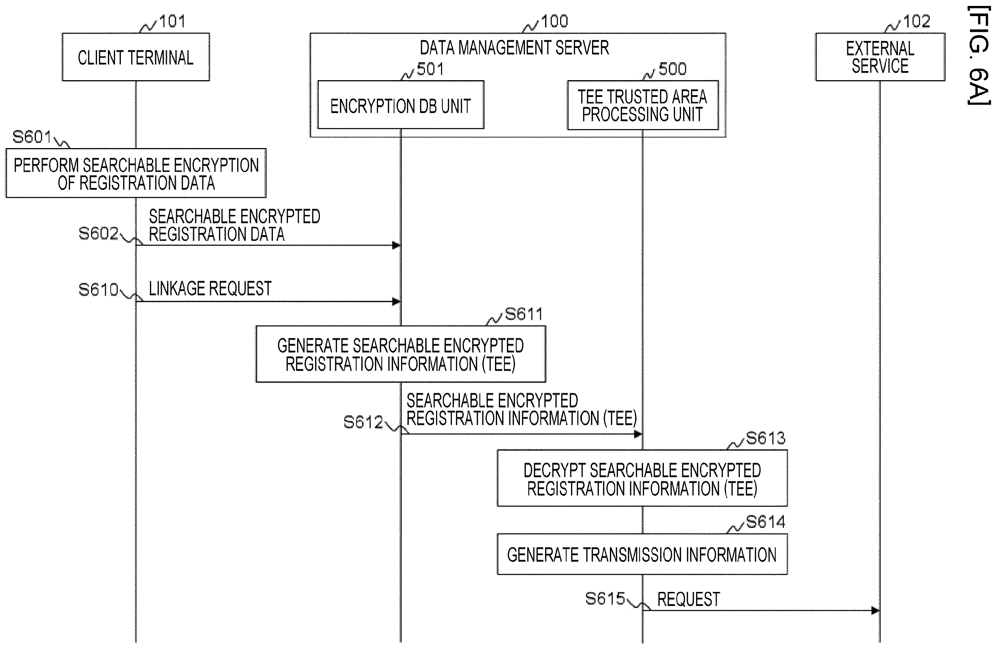

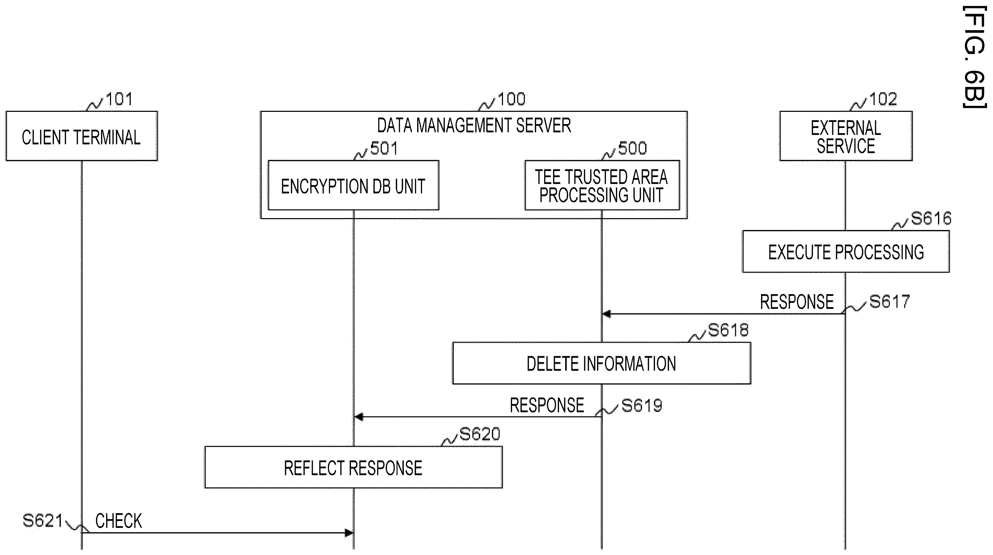

FIGS. 6A and 6B are sequence charts illustrating one example of the sequence of processing performed by the computer system according to the first embodiment.

The client terminal 101 performs searchable encryption to a piece of registration data that is to be registered in the data management server, using the user secret key 410, thereby generating searchable encrypted registration data (step S601).

The client terminal 101 then registers the searchable encrypted registration data in the data management server 100 (step S602).

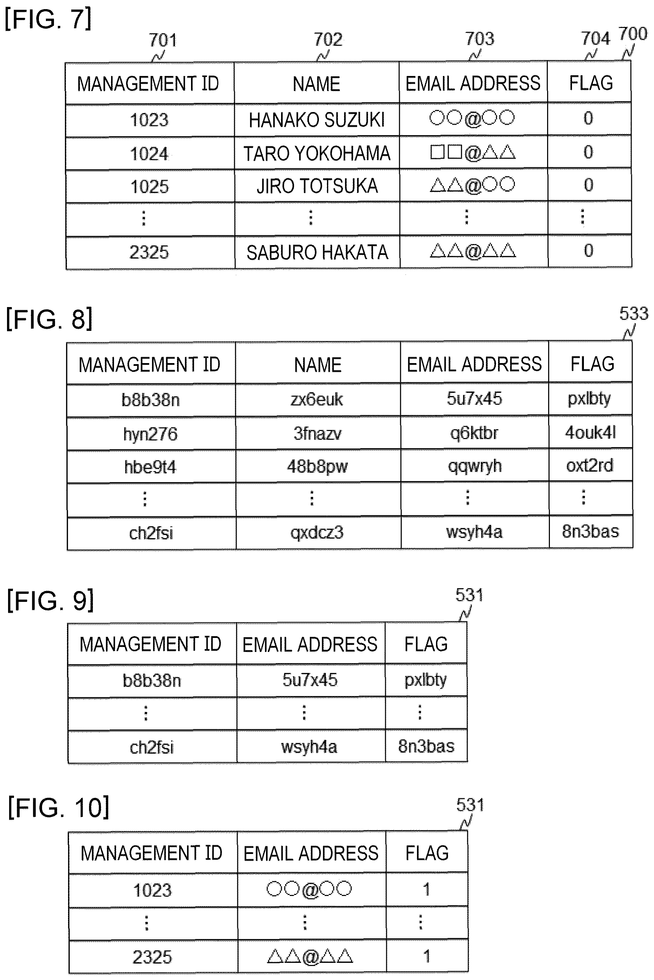

The registration data and the searchable encrypted registration data will now be explained with reference to FIGS. 7 and 8.

FIG. 7 is a diagram illustrating one example of registration information according to the first embodiment. The registration information 700 stores therein a record including a management ID 701, a name 702, an email address 703, and a flag 704. One record corresponds to the registration data of one user. Note that the columns included in the record are exemplary, and the present invention is not limited thereto.

The management ID 701 is a column for storing an ID of a record in the registration information 700. The name 702 and the email address 703 are columns for storing the name and the email address of the user, respectively.

The flag 704 is a column for storing therein a flag indicating whether this user is to be a recipient of a batch email transmission. When this user is to be a recipient of a batch email transmission, "1" is stored in the flag 704. When this user is not to be the recipient of a batch email transmission, "0" is stored in the flag 704. The initial value of this flag 704 is set to "0".

FIG. 8 is a diagram illustrating one example of the searchable encrypted registration information 533 according to the first embodiment. A record in the searchable encrypted registration information 533 has the same structure as that of a record in the registration information 700. An exception is that each of the columns stores therein searchable encrypted data values.

When emails are to be transmitted to users, the user administrator acquires the searchable encrypted registration information 533 from the data management server 100, by making operations on the client terminal 101. The decryption unit 401 in the client terminal 101 decrypts the searchable encrypted registration information 533. The user administrator adds a flag "1" to a piece of registration data stored in the plaintext registration information 700. The client terminal 101 registers, in the data management server 100, the flag "1" for the record of a user who is to be the recipient of a batch email transmission, and transmits a linkage request indicating linkage with the external service 102 (step S610). In the data management server 100, the flag encrypted with searchable encryption, which is executed by the searchable encryption unit 400, is registered.

The encryption DB unit 501 in the data management server 100 extracts a record having been registered with the flag "1", from the searchable encrypted registration information 533, and generates searchable encrypted registration information (TEE) 531 (step S611). For example, searchable encrypted registration information (TEE) 531, as illustrated in FIG. 9, is generated.

The encryption DB unit 501 in the data management server 100 stores the searchable encrypted registration information (TEE) 531 in the TEE trusted area 310 (step S612).

The decryption unit 512 in the TEE trusted area processing unit 500 decrypts the searchable encrypted registration information (TEE) 531, using the user secret key 530 (step S613). When the searchable encrypted registration information (TEE) 531 illustrated in FIG. 9 is decrypted, the result illustrated in FIG. 10 is obtained.

The transmission information generation unit 513 in the TEE trusted area processing unit 500 generates the transmission information 532 using the decrypted searchable encrypted registration information (TEE) 531 (step S614).

Specifically, the transmission information generation unit 513 generates transmission information 532 in a data format that can be used by the external service 102 with which a linkage is to be established. For example, for one piece of registration data of the decrypted searchable encrypted registration information (TEE) 531, one piece of transmission data including a sender address, a receiver address, a subject, and a message body to be used in an email transmission is generated.

Note that the transmission information generation unit 513 may include data values of all of the columns included in the registration data, in the transmission data, or may include the data values of predetermined columns, among those in the registration data, in the transmission data.

The TEE trusted area processing unit 500 transmits a request including the transmission information 532 to the external service 102 (step S615).

Note that communication between the data management server 100 and the external service 102 is preferably encrypted using Transport Layer Security (TLS)/Secure Sockets Layer (SSL), for example. By encrypting the communication, only the encrypted information traverses across the communication path between the client terminal 101 and the external service 102, so that security is improved.

Upon receiving the request, the external service 102 executes processing corresponding to the request (step S616), and transmits a response to the data management server 100 (step S617). The response is received by the TEE trusted area processing unit 500. In this embodiment, the external service 102 transmits emails to the users designated by the user administrator.

Upon receiving the response, the TEE trusted area processing unit 500 in the data management server 100 deletes the searchable encrypted registration information (TEE) 531 and the transmission information 532 (step S618).

The TEE trusted area processing unit 500 in the data management server 100 transmits a response to the encryption DB unit 501 (step S619). The encryption DB unit 501 in the data management server 100 reflects the response to the searchable encrypted registration information 533 (step S620). Note that the processing in step S619 and step S620 may also be omitted.

The user administrator checks for the processing result of the external service 102, on the client terminal 101, as necessary (step S621).

According to the first embodiment, a linkage with the external service 102 can be established while maintaining the registration data in a concealed state.

Because the user secret key 530 is stored in the TEE trusted area 310, and the searchable encrypted registration data is decrypted only in the TEE trusted area 310, the risk of information leakage due to cyberattacks can be reduced, and the risk of information leakage to the service provider can also be reduced.

Because the registration data is transmitted and received in the encrypted state, between the client terminal 101 and the data management server 100, and between the data management server 100 and the external service 102, concealment is ensured.

In addition, at the time of generating transmission data, by extracting only the data values required by the external service 102 and including the data values in the transmission data, the risk of information leakage can be further reduced.

In the first embodiment, the use case of a batch email transmission has been described as an example. However, control that is the same as that in the first embodiment may also be used in a use case such as one in which a form containing sensitive information such as personal information is registered in an external file server.

### [Second Embodiment]

In a second embodiment, a system supporting a use case in which an unspecified number of general users register registration data will be described. The second embodiment will be explained below, focusing on the difference with respect to the first embodiment.

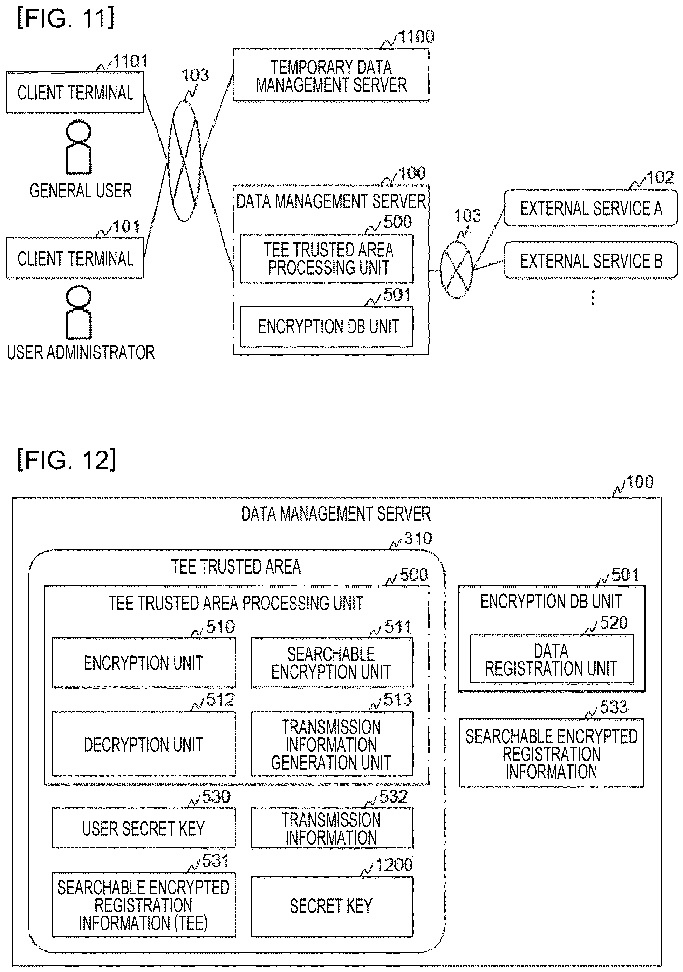

FIG. 11 is a diagram illustrating an exemplary configuration of the computer system according to the second embodiment.

The computer system according to the second embodiment is different from the computer system according to the first embodiment in that the computer system includes a temporary data management server 1100 and a client terminal 1101.

The client terminal 1101 is a terminal on which a general user who uses a service provided by a user administrator makes operations. The client terminal 1101 has the same hardware configuration as that of the client terminal 101.

The temporary data management server 1100 temporarily stores therein registration data registered by a general user. The temporary data management server 1100 has the same hardware configuration as that of the data management server 100.

It is assumed that the data management server 100 and the temporary data management server 1100 are provided by the same service provider. In other words, the data management server 100 and the temporary data management server 1100 are provided as one system.

FIG. 12 is a diagram illustrating one example of a functional configuration of the data management server 100 according to the second embodiment.

The TEE trusted area 310 according to the second embodiment is different from the TEE trusted area 310 according to the first embodiment in that it has a secret key 1200 having been generated using a public key infrastructure (PKI). The secret key 1200 is shared between the TEE trusted area 310 and the temporary data management server 1100.

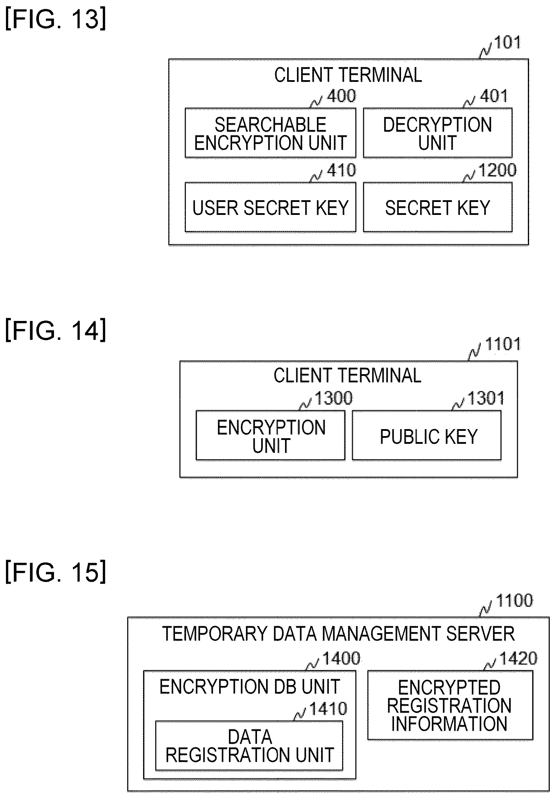

FIG. 13 is a diagram illustrating one example of a functional configuration of the client terminal 101 according to the second embodiment.

The client terminal 101 according to the second embodiment is different from the client terminal 101 according to the first embodiment in that the client terminal 101 according to the second embodiment has the same secret key as the secret key 1200 included in the TEE trusted area 310.

FIG. 14 is a diagram illustrating one example of a functional configuration of the client terminal 1101 according to the second embodiment.

The client terminal 1101 includes an encryption unit 1300, as a functional configuration. The encryption unit 1300 is implemented by a CPU (not illustrated) executing a program stored in a main storage device (not illustrated). The client terminal 1101 also retains a public key 1301.

Note that the client terminal 1101 also has functions and information not illustrated, but functions and information not directly related to the present invention are omitted.

The public key 1301 is a key generated using the public key infrastructure. The public key 1301 is shared between the client terminal 1101 and the temporary data management server 1100. The public key 1301 is used in the encryption of the registration data to be transmitted to the temporary data management server 1100. Note that the present invention is not limited to any key distribution method.

The encryption unit 1300 encrypts data using a basic encryption technology such as advanced encryption standard (AES).

FIG. 15 is a diagram illustrating one example of a functional configuration of the temporary data management server 1100 according to the second embodiment.

The temporary data management server 1100 includes an encryption DB unit 1400, as a functional configuration. The encryption DB unit 1400 is implemented by a CPU (not illustrated) executing a program stored in a main storage device (not illustrated).

Note that the temporary data management server 1100 also has functions and information not illustrated, but functions and information not directly related to the present invention are omitted.

The encryption DB unit 1400 includes a data registration unit 1410. The encryption DB unit 1400 also manages encrypted registration information 1420.

The encrypted registration information 1420 stores therein registration data including encrypted data values. In this embodiment, one registration data (record) corresponds to one user. The data registration unit 1410 registers encrypted registration data in the encrypted registration information 1420.

Processing performed by the computer system according to the second embodiment will now be explained.

In the second embodiment, it is assumed that a linkage is to be established with an external service 102 that provides electronic Know Your Computer (eKYC). Examples of the eKYC scheme permitted under the Act on Prevention of Transfer of Criminal Proceeds include verification of identity between an image of an identification document and an image representing the facial features of the person, and verification of identity between IC chip information in an identification document and an image representing the facial features of the person. As to the identity verification technology used in eKYC, many business operators have their own algorithms.

In such a case, a general user needs to register his/her selfie photograph and an image of an identification document, such as a driver's license and My Number Card, in the data management server 100, as registration data. If a method for distributing the user secret key 410 to a general user is used, in the same manner as the method according to the first embodiment, the general user can directly register searchable encrypted registration data in the data management server 100. However, this method imposes a heavy key management burden on the user administrator, and is also not preferable in terms of security.

Therefore, in the second embodiment, the general user encrypts the registration data using a general public key infrastructure, and registers the encrypted registration data in the temporary data management server 1100. The TEE trusted area 310 decrypts the encrypted registration data, and establishes a linkage with the external service 102. The user administrator then decrypts the encrypted registration data, checks the content of the registration data, applies searchable encryption thereto, and registers the encrypted registration data in the data management server 100. In this manner, the burden of key management is alleviated, and security is also improved.

The data management server 100 according to the second embodiment transmits the encrypted registration data to the external service 102, in the same manner as in the first embodiment.

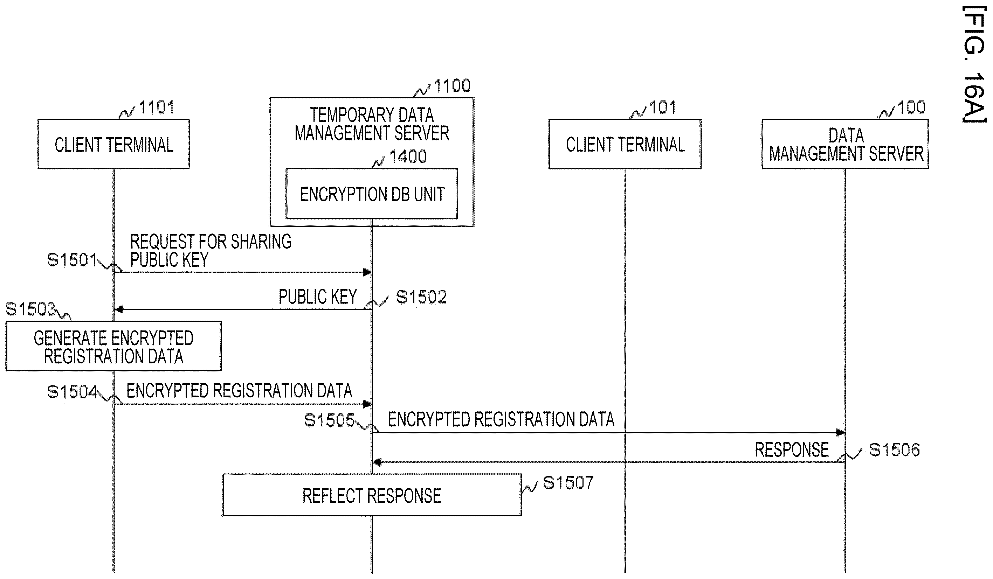

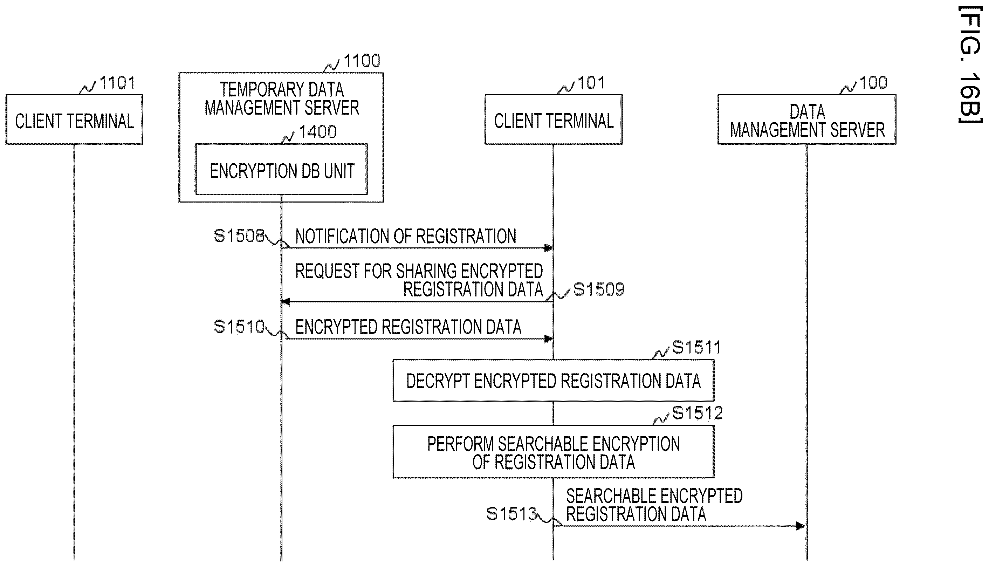

FIGS. 16A and 16B are sequence charts illustrating one example of the sequence of processing performed by the computer system according to the second embodiment.

The client terminal 1101 transmits a request for sharing a public key, to the temporary data management server 1100 (step S1501).

Upon receiving the request for sharing a public key, the temporary data management server 1100 generates a public key 1301 using the public key infrastructure, and transmits the public key 1301 to the client terminal 1101 (step S1502). Note that there is no limitation in the method for generating the public key 1301.

The encryption unit 1300 in the client terminal 1101 encrypts the registration data using the public key 1301, thereby generating encrypted registration data (step S1503).

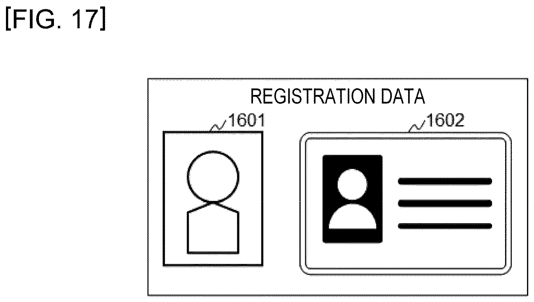

FIG. 17 is a diagram illustrating one example of the registration data according to the second embodiment. The registration data includes a selfie photograph 1601 and an image of an identification document 1602 such as a driver's license or My Number Card.

The client terminal 1101 registers the encrypted registration data in the temporary data management server 1100 (step S1504).

The temporary data management server 1100 transmits the encrypted registration data to the data management server 110 (step S1505).

The decryption unit 512 in the TEE trusted area processing unit 500 decrypts the encrypted registration data using the secret key 1200, and establishes a linkage with the external service 102. The processing of establishing a linkage with the external service 102 is the same as that in the first embodiment. Note that the encrypted registration data may be transmitted from the temporary data management server 1100 to the data management server 100 (push system), or the external service 102 may request the encrypted registration data from the data management server 100 (pull system).

After completing the processing in the external service, the temporary data management server 1100 receives the response (step S1506), and reflects the content of the response (step S1507).

After reflecting the content of the response, the temporary data management server 1100 transmits a notification of the registration to the client terminal 101 (step S1508).

Upon receiving the registration notification, the client terminal 101 transmits a request for sharing the encrypted registration data, to the temporary data management server 1100 (step S1509).

Upon receiving the request for sharing, the temporary data management server 1100 transmits the encrypted registration data to the client terminal 101 (step S1510).

The decryption unit 401 in the client terminal 101 decrypts the encrypted registration data using the secret key 1200 (step S1511). At this time, the user administrator may verify the content of the registration data. The user administrator may also manage the status on the basis of the verification result.

The searchable encryption unit 400 in the client terminal 101 performs searchable encryption on the registration data, thereby generating searchable encrypted registration data (step S1512). The client terminal 101 also registers the searchable encrypted registration data in the data management server 100 (step S1513).

Note that the data management server 100 may delete the encrypted registration data stored in the temporary data management server 1100 upon acquiring the encrypted registration data from the temporary data management server 1100, upon registering the searchable encrypted registration data, or on a regular basis.

According to the second embodiment, it is possible to securely manage registration data submitted by a general user, and implement a linkage with the external service 102.

### [Third Embodiment]

The third embodiment is different from the first embodiment in that the data management server 100 transmits data in response to a request from the external service 102. The third embodiment will now be described focusing on the difference with respect to the first embodiment.

The configuration of the system according to the third embodiment is the same as that of the first embodiment. The data management server 100 and the client terminal 101 according to the third embodiment have the same hardware configurations and functional configurations as those according to the first embodiment.

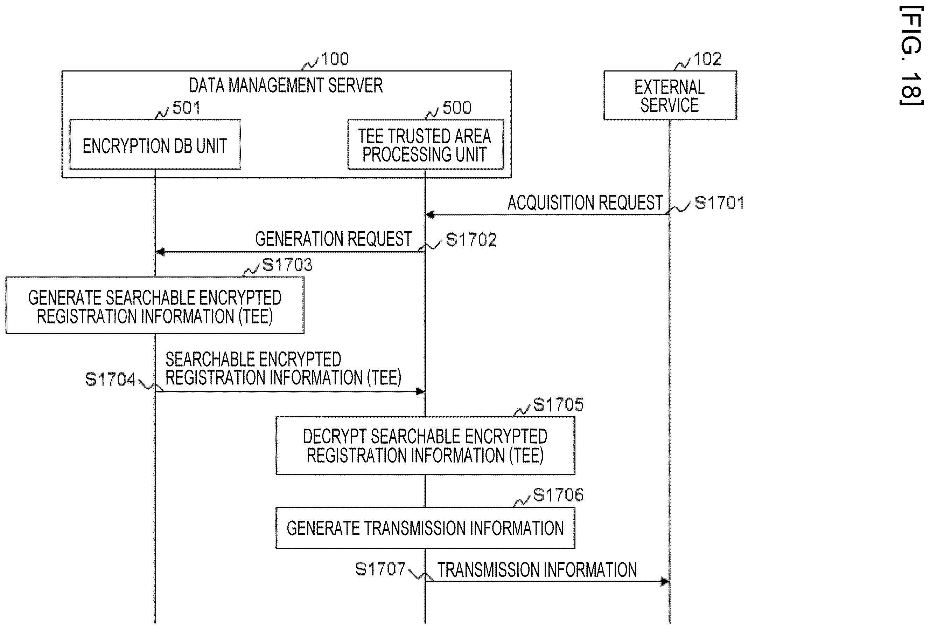

FIG. 18 is a sequence chart illustrating one example of the sequence of processing performed by the computer system according to the third embodiment. It is assumed herein that the linkage with the external service 102 has already been established by the processing described in the first embodiment.

The external service 102 transmits an acquisition request including a search key for searching searchable encrypted registration data, to the TEE trusted area processing unit 500 in the data management server 100 (step S1701). The search key is, for example, a login ID used in the processing of logging into the external service 102. The acquisition request includes information of a column to be included in the data, for example.

The TEE trusted area processing unit 500 in the data management server 100 transmits a generation request including the search key, to the encryption DB unit 501 (step S1702). The generation request includes information of a column to be included in the data, for example.

The encryption DB unit 501 acquires searchable encrypted registration data from the searchable encrypted registration information 533, generates searchable encrypted registration information (TEE) 531 (step S1703), and transmits the searchable encrypted registration information to the TEE trusted area processing unit 500 (step S1704).

The decryption unit 512 in the TEE trusted area processing unit 500 decrypts the searchable encrypted registration information (TEE) 531, using the user secret key 530 (step S1705).

The transmission information generation unit 513 in the TEE trusted area processing unit 500 generates transmission information 532 using the decrypted searchable encrypted registration information (TEE) 531 (step S1706).

The TEE trusted area processing unit 500 transmits the transmission information 532 to the external service 102 (step S1707).

The external service 102 may transmit the results of the processing to the TEE trusted area processing unit 500, as needed. The TEE trusted area processing unit 500 may delete the searchable encrypted registration information (TEE) 531 and the transmission information 532 after transmitting the transmission information 532 or upon receiving the processing results from the external service 102.

One possible use case of the third embodiment will be described below. The data management server 100 manages the user data of a general user as registration data, and the external service 102 performs login processing and processing of submitting an application form for a general user. In this case, after the login of a general user, the external service 102 presents an operation screen for creating an application form for a government service. The external service 102 transmits an acquisition request including a management ID and the like used at the time of login processing, as a search key to the data management server 100. The data management server 100 generates transmission information 532 including personal information of the general user, and transmits the transmission information 532 to the external service 102. The external service 102 automatically enters values to predetermined fields of the operation screen on the basis of the transmission information 532.

In the use case described above, processing efficiency is improved because the cumbersomeness of a general user in entering information is reduced. In addition, because input errors and the like can be reduced, also for the external service 102, service quality can be improved. In addition, the registration information is transmitted and received in an encrypted state between the client terminal 101 and the data management server 100 and between the data management server 100 and the external service 102, in the same manner as in the first embodiment, so that concealment is ensured.

Note that the present invention is not limited to the embodiments described above, and includes various modifications thereof. For example, the embodiments have been described in detail to facilitate understanding of the present invention, and are not necessarily limited to those having all of the configurations described above. In addition, in relation to a part of the configuration according to each of the embodiments, another configuration may be added thereto, or the part may be deleted or replaced with another.

In addition, some or all of the configurations, the functions, the processing unit, processing means, or the like explained above may be implemented as hardware, through designing of an integrated circuit, for example. In addition, the present invention may also be implemented by a program code of a piece of software that implements the functions according to the embodiments. In such a case, a storage medium in which the program code is recorded is provided to a computer, and a processor included in the computer reads the program code stored in the storage medium. In such a case, the program code itself read from the storage medium implements the functions of the embodiments described above, and the program code itself and the storage medium storing the program code constitute the present invention. As the storage medium for supplying such a program code, for example, a flexible disk, a CD-ROM, a DVD-ROM, a hard disk, a solid-state drive (SSD), an optical disk, a magneto-optical disk, a CD-R, a magnetic tape, a non-volatile memory card, a ROM, or the like is used.

Furthermore, the program code for implementing the functions described in the embodiments may be implemented using a wide range of programs or script languages such as assembler, C/C++, perl, Shell, PHP, Python, and Java.

Furthermore, the program code of the piece of software implementing the functions according to the embodiments may be distributed over a network, and stored in a storage unit such as a hard disk or a memory of a computer, or a storage medium such as a CD-RW or a CD-R. The processor included in the computer may then read and execute the program code stored in the storage unit or the storage medium.

In the embodiments described above, control lines and information lines illustrated are those considered to be necessary for the explanation, and are not necessarily representations of all of the control lines and the information lines in a product. All of the configurations may be connected to each other.

## Claims

1. A data management system comprising at least one computer including a processing device and a storage device, and configured:
to manage a first database that stores concealed data having been encrypted based on a probabilistic encryption scheme using a user secret key; and
to connect to a client terminal that registers the concealed data in a data management system, and to a service providing system that provides a service, wherein
the processing device has a function for generating a trusted area in which security is ensured and that is logically isolated, in the storage device,
the data management system is configured:
to acquire at least one piece of the concealed data from the first database, and to store the at least one piece of the concealed data in the trusted area, upon receiving a request indicating use of the service that uses the concealed data from the client terminal;
to decrypt the concealed data thus acquired, in the trusted area;
to generate first transmission data to be transmitted to the service providing system, in the trusted area, by using the concealed data thus decrypted, for the use of the service; and
to encrypt the first transmission data in a format that is decryptable by the service providing system, in the trusted area, and
to transmit the first transmission data thus encrypted, to the service providing system.

2. The data management system according to claim 1, wherein the user secret key is stored in the trusted area.

3. The data management system according to claim 2, further configured:
to identify a piece of concealed data to be transmitted, from the first database;
to acquire a data value necessary for the use of the service, from the piece of concealed data thus identified; and
to store concealed data including the data value thus acquired, in the trusted area.

4. The data management system according to claim 2, further configured to delete concealed data having been decrypted and stored in the trusted area, after transmitting the encrypted first transmission data.

5. The data management system according to claim 1, further configured:
to manage a second database that receives registration data having been encrypted with a public-key cryptography, the registration data being data for generating concealed data, from a user;
the client terminal is configured to retain the user secret key and a secret key of the public-key cryptography, and
the data management system is configured to cause the client terminal to decrypt the registration data stored in the second database, using the secret key of the public-key cryptography, and to store concealed data that is searchable encryption of the registration data, the searchable encryption being executed using the user secret key, in the first database.

6. The data management system according to claim 5, further configured to delete the registration data stored in the second database at a predetermined timing.

7. The data management system according to claim 1, further configured:
to acquire at least one piece of the concealed data from the first database, and to store the at least one piece of the concealed data in the trusted area upon receiving a request for acquiring the concealed data from the service providing system;
to decrypt the concealed data having been acquired, in the trusted area;
to generate second transmission data including a data value requested by the service providing system, in the trusted area, using the concealed data having been decrypted;
to encrypt the second transmission data in a format that is decryptable by the service providing system, in the trusted area; and
to transmit the second transmission data thus encrypted to the service providing system.

8. An information processing method using concealed data, the information processing method being executed by a data management system that includes at least one computer including a processing device and a storage device, and that is configured:
to manage a first database that stores concealed data having been encrypted based on a probabilistic encryption scheme using a user secret key; and
to connect to a client terminal that registers the concealed data in a data management system, and to a service providing system that provides a service; and
the processing device has a function for generating a trusted area in which security is ensured and that is logically isolated, in the storage device,
the information processing method comprising:
a first step in which the data management system acquires at least one piece of the concealed data from the first database, and stores the at least one piece of the concealed data in the trusted area, upon receiving a request indicating use of the service that uses the concealed data from the client terminal;
a second step in which the data management system decrypts the concealed data thus acquired, in the trusted area;
a third step in which the data management system generates first transmission data to be transmitted to the service providing system, in the trusted area, by using the concealed data thus decrypted, for the use of the service;
a fourth step in which the data management system encrypts the first transmission data in a format that is decryptable by the service providing system, in the trusted area; and
a fifth step in which the data management system transmits the first transmission data thus encrypted to the service providing system.

9. The information processing method using concealed data according to claim 8, wherein the user secret key is stored in the trusted area.

10. The information processing method using concealed data according to claim 9, wherein
the first step includes:
a step in which the data management system identifies the concealed data to be transmitted, from the first database;
a step in which the data management system acquires a data value necessary for the use of the service, from the concealed data; and
a step in which the data management system stores concealed data including the acquired data value in the trusted area.

11. The information processing method using concealed data according to claim 9, the information processing method further comprising a step in which the data management system deletes the concealed data having been decrypted and stored in the trusted area, after transmitting the encrypted first transmission data.

12. The information processing method using concealed data according to claim 8, wherein
the data management system is configured to manage a second database that receives registration data having been encrypted with a public-key cryptography, the registration data being data for generating concealed data, from a user, and
the client terminal is configured to retain the user secret key and a secret key of the public-key cryptography, and
the information processing method further comprising a step in which the data management system causes the client terminal to decrypt the registration data stored in the second database, using the secret key of the public-key cryptography, and to store concealed data that is searchable encryption of the registration data, the searchable encryption being executed using the user secret key, in the first database.

13. The information processing method using the concealed data according to claim 12, the information processing method further comprising a step in which the data management system deletes the registration data stored in the second database at a predetermined timing.

14. The information processing method using concealed data according to claim 8, the information processing method further comprising:
a step in which the data management system acquires at least one piece of the concealed data from the first database, and to store the at least one piece of the concealed data in the trusted area upon receiving a request for acquiring the concealed data from the service providing system;
a step in which the data management system decrypts the concealed data having been acquired, in the trusted area;
a step in which the data management system generates second transmission data including a data value requested by the service providing system, in the trusted area, using the concealed data having been decrypted;
a step in which the data management system encrypts the second transmission data in a format that is decryptable by the service providing system, in the trusted area; and
a step in which the data management system transmits the encrypted second transmission data to the service providing system.
